# EUROPÄISCHE PATENTSCHRIFT

(11) **EP 0 402 607 B1**
(45) Veröffentlichungstag und Bekanntmachung des Hinweises auf die Patenterteilung: **21.07.1993**
(21) Anmeldenummer: 90108408.7
(22) Anmeldetag: 04.05.1990
(51) Int. Cl.: F16C 3/20, F16F 15/28

(54) **Vorrichtung zum Ausrichten eines Gegengewichts und Verfahren zum ausgerichteten Befestigen eines Gegengewichts an einer Kurbelwelle mit Hilfe der Vorrichtung**
Counterweight adjusting device and method of adjusting a counterweight to a crankshaft by using the device
Dispositif d'ajustage d'un contre-poids et procédé de fixation d'un contre-poids ajusté à un vilbrequin au moyen du dispositif

(30) Priorität: 15.06.1989 DE 3919503
(43) Veröffentlichungstag der Anmeldung: 19.12.1990
(73) Patentinhaber: DAIMLER-BENZ AKTIENGESELLSCHAFT, 70327 Stuttgart (DE)
(72) Erfinder: Mirjanic, Milorad, D-7012 Fellbach (DE)

(56) Entgegenhaltungen:
- EP-A- 0 075 659
- DE-B- 1 273 900
- DE-C- 1 111 877

## Beschreibung

Die Erfindung bezieht sich auf eine Vorrichtung zum Ausrichten eines Gegengewichts an einer Kurbelwelle mit den im Oberbegriff des Patentanspruchs 1 angegebenen Merkmalen sowie auf ein Verfahren zum ausgerichteten Befestigen eines Gegengewichts an einer Kurbelwelle mit Hilfe der Vorrichtung mit den im Oberbegriff des Patentanspruchs 5 angegebenen Merkmalen.

Eine Kurbelwelle mit angeschraubten Gegengewichten ist beispielsweise aus der DE-A-37 38 717 oder der DE-B-12 73 900 bekannt. Bei einer derartigen Kurbelwelle müssen im Reparaturfall, beispielsweise wenn die Lager nachgeschliffen werden sollen, die Gegengewichte aus Platzgründen entfernt und anschließend wieder angeschraubt werden. Dabei kann nicht ausgeschlössen werden, daß ein jedes Gegengewicht, insbesondere infolge Spiel zwischen den Befestigungsschrauben und den Durchgangslochern im Gegengewicht, um einen Betrag bis etwa ein bis zwei Millimeter gegenüber der Ausgangslage, in der die Wuchtung der Kurbelwelle vorgenommen wurde, quer zu deren Längsachse und damit auch radial versetzt wieder befestigt wird. Dieser Versatz reicht aus, eine nicht tolerierbare Unwucht entstehen zu lassen. Auch besteht die Gefahr, daß bei den sehr beengten Platzverhältnissen zwischen der Kurbelwelle und einem diese umgebenden Kurbelgehäuse das Gegengewicht an der Kurbelgehäusewandung anschlägt. Eine neue Wuchtung ist, auch wegen der in vielen Reparaturbetrieben fehlenden Wuchtmaschinen, mit erheblichem Aufwand verbunden.

Der Erfindung liegt die Aufgabe zugrunde, eine Vorrichtung und ein Verfahren mit Hilfe dieser Vorrichtung anzugeben, mit denen eine derartige Wiederbefestigung eines Gegengewichts an einer Kurbelwelle ermöglicht wird, daß die im ursprünglichen Zustand vorhandene Wuchtung der Kurbelwelle und der notwendige Freigang zwischen Gegengewicht und Kurbelgehäusewandung innerhalb der zulässigen Toleranz erhalten bleiben.

Die Aufgabe ist erfindungsgemäß für die Vorrichtung durch die kennzeichnenden Merkmale des Patentanspruchs 1 sowie durch die kennzeichnenden Verfahrensschritte des Patentanspruchs 5 gelöst.

Durch die einfach herzustellende und zu handhabende Vorrichtung ist, sofern ihre Anwendung bei der Ausrichtung und Befestigung des Gegengewichts sowohl beim ursprünglichen Anbringen vor der Wuchtung wie auch bei der Wiederbefestigung in derselben Weise erfolgt, sichergestellt, daß das Gegengewicht bei der Wiederbefestigung mit ausreichender Genauigkeit in radialer Richtung die ursprüngliche Lage wieder einnimmt, so daß die ursprüngliche Wucht erhalten und damit eine neue Wuchtung erspart bleibt. Auch der Freigang zwischen Gegengewicht und Kurbelgehäusewandung bleibt unverändert.

In den Patentansprüchen 2 bis 4 sind Ausgestaltungen der Vorrichtung angegeben, die ihre Handhabung weiter erleichtern und die bei der Anwendung auftretenden Fehler möglichst gering halten.

Im Patentanspruch 5 ist ein einfaches und wirkungsvolles Verfahren beschrieben, das mit Hilfe der Vorrichtung eine lagegenaue Ausrichtung und Befestigung des Gegengewichts sicherstellt.

Durch das Verfahren des Patentanspruchs 6 wird auf einfache Weise sichergestellt, daß die ursprüngliche Ausrichtung des Gegengewichts in Kurbelwellenquerrichtung durch entsprechendes Drehen um das eine Durchgangsloch im Gegengewicht wieder hergestellt wird, die neben ihrer Bedeutung für die Wuchtung vor allem für den Freigang axial benachbarter Teile wie einem Pleuel wichtig ist.

Im folgenden wird die Erfindung anhand eines in der Zeichnung dargestellten Ausführungsbeispiels näher erläutert. Dabei zeigt:

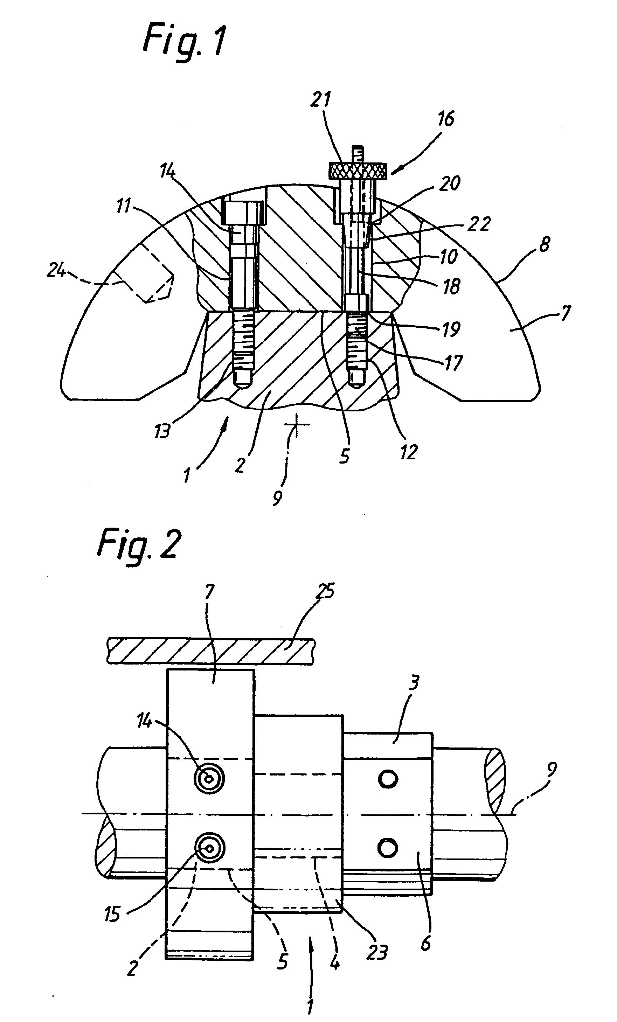

- Fig. 1: ein auf eine Kurbelwange einer Kurbelwelle aufgesetztes Gegengewicht im Querschnitt und
- Fig. 2: die Kurbelwelle der Fig. 1 mit einem zwischen zwei Kurbelwangen eingesetztem Distanzstück in teilweiser Draufsicht.

Eine Kurbelwelle 1 weist zwei Kurbelwangen 2 und 3 mit dazwischen angeordnetem Pleuellager 4 für zwei nicht dargestellte Pleuelstangen auf. Die Kurbelwangen 2, 3 sind jeweils mit einer Auflagefläche 5, 6 für je ein Gegengewicht 7 abgeflacht. Dieses hat in der Ansicht in Längsrichtung der Kurbelwelle 1 im wesentlichen die Form eines Kreisringabschnitts mit einem Erstreckungswinkel von fast 180°. Die mittlere innere Kontur ist abgeflacht zur Auflage auf der Auflagefläche 5, die äußere Kontur 8 ist zylinderförmig mit einer in die Mittellängsachse 9 der Kurbelwelle 1 fallenden Achse. Das Gegengewicht 7 umfaßt somit mit seinen beiden seitlichen Endbereichen die Kurbelwange 2 in Umfangsrichtung.

Im Gegengewicht 7 sind ein erstes Durchgangsloch 10 und ein zweites Durchgangsloch 11 sowie entsprechend in der Kurbelwange 2 ein erstes Gewindeloch 12 und ein zweites Gewindeloch 13 angeordnet zur Befestigung des Gegengewichts 7 an der Kurbelwange 2 mittels zweier Schrauben 14 und 15.

Um zu erreichen, daß das Gegengewicht 7 nach einer Wiederbefestigung in radialer Richtung genau die gleiche Lage wieder einnimmt wie bei seiner Erstbefestigung, nach der die Wuchtung der Kurbelwelle 1 vorgenommen wurde, um also eine neue Wuchtung zu vermeiden, wird in der folgenden Weise vorgegangen. Das Gegengewicht 7 wird zu seiner Erstbefestigung auf die Auflagefläche 5 aufgelegt, anschließend wird das erste Durchgangsloch 10 mit dem ersten Gewindeloch 12 mit Hilfe eines Werkzeugs 16 konzentrisch ausgerichtet. Dazu wird ein Zentriergewinde 17 am Ende eines Schafts 18 des Werkzeugs 16 in das erste Gewindeloch 12 eingedreht, bis eine Spannfläche 19 am Schaft 18, die senkrecht zu diesem ausgerichtet ist und einen geringfügig größeren Durchmesser als das Gewindeloch 12 hat und mit Spiel in das Durchgangsloch 10 einführbar ist, auf der Auflagefläche 5 aufliegt und mit dieser verspannt ist, so daß die senkrechte Ausrichtung des Schafts 18 zur Auflagefläche 5 sichergestellt ist. Anschließend wird ein mit Schiebesitz frei auf dem Schaft 18 verschiebbares Zentrierstück 20 auf das erste Durchgangsloch 10 aufgesetzt und durch eine auf den Schaft 18 aufgeschraubte Rändelmutter 21 belastet. Das Zentrierstück 20 weist einen Außenkonus 22 auf mit einem sich zum Außengewinde 17 hin verjüngenden Konuswinkel von etwa 6°. Der Durchmesser des Durchgangslochs 10 liegt zwischen dem größten und kleinsten Durchmesser des Außenkonus 22, so daß dieser teilweise in das Durchgangsloch 10 eintaucht und lediglich an dessen oberem Rand anliegt. Durch das Eindrücken des Zentrierstücks 20 in das Durchgangsloch 10 wird das Gegengewicht 7 mit Hilfe der Rändelmutter 21 soweit auf der Auflagefläche 5 verschoben, daß das Durchgangsloch 10 mit dem Schaft 18 und damit mit dem Gewindeloch 12 konzentrisch ausgerichtet ist. Die Wahl des Konuswinkels geringfügig oberhalb des Selbsthemmungswinkels ermöglicht einerseits ein leichtes Wiederherausziehen des Zentrierstücks und minimiert andererseits den durch eine verbleibende exzentrische Anlage des Zentrierstücks 16 am Durchgangsloch 10 entstehenden Fehler.

Um eine Schräglage des Gegengewichts 7 zur Querrichtung der Kurbelwelle 1 zu vermeiden, die die Wuchtung weniger, jedoch erheblich den Freigang der benachbarten Pleuel beeinträchtigen wurde, wird zwischen die beiden Kurbelwangen 2 und 3 ein Distanzstück 23 eingesetzt, das das Gegengewicht 7 durch Drehen um das Werkzeug 16 in Kurbelwellenquerrichtung ausrichtet.

Als nächster Schritt wird die erste Befestigungsschraube 14 in das zweite Durchgangsloch 11 eingesetzt und im zweiten Gewindeloch 13 festgeschraubt. Anschließend wird das Werkzeug 16 nach dem Lösen des Zentrierstücks 20 herausgeschraubt und die zweite Befestigungsschraube 15 in das erste Durchgangsloch 10 eingesetzt und im ersten Gewindeloch 12 festgeschraubt. Damit ist die Lage des Gegengewichts 7 gegenüber der Kurbelwange 2 in einer genau wiederholbaren Weise festgelegt. Es kann nun die Wuchtung der Kurbelwelle 1 erfolgen, beispielsweise durch Materialentnahme mittels einer Bohrung 24 im Gegengewicht 7.

Im Falle einer Reparatur der Kurbelwelle 7, beispielsweise eines Nachschleifens eines Lagers, kann diese wegen der beengten Platzverhältnisse nur nach Entfernen des Gegengewichts 7 erfolgen. Nach der Reparatur wird das Gegengewicht 7 in genau der gleichen Weise, wie oben für die Erstbefestigung beschrieben, wieder an der Kurbelwange 2 befestigt, wobei besonders darauf zu achten ist, daß das Werkzeug 16 in dasselbe erste Durchgangsloch 10 und dasselbe erste Gewindeloch 12 eingesetzt wird. Damit ist sichergestellt, daß das Gegengewicht 7 genau die ursprüngliche Lage wieder einnimmt und damit auch die gleiche Wucht aufweist, so daß eine erneute Wuchtung entfallen kann. Auch ein bei der Erstbefestigung festgelegter Abstand des Gegengewichts 7 zu einer Kurbelgehäusewandung 25 bleibt bei der Wiederbefestigung erhalten, so daß keine Gefahr des Anstreifens des Gegengewichts 7 an dieser Wandung 25 besteht.

## Patentansprüche

1. Vorrichtung zum Ausrichten eines auf einer Befestigungsfläche (5) an einer Kurbelwange (2) einer Kurbelwelle (1) aufgelegten Gegengewichts (7), wobei das Ausrichten zur Vorbereitung der lagegenauen Befestigung des Gegengewichts (7) an der Kurbelwange (2) mittels zweier durch zwei Durchgangslöcher (10, 11) im Gegengewicht (7) geführter und in zwei von der Befestigungsfläche (5) ausgehende Gewindelöcher (12, 13) in der Kurbelwange (2) eingeschraubter Befestigungsschrauben (14, 15) dient, **gekennzeichnet** durch
a) einen in das eine Durchgangsloch (10) einführbaren, am Ende mit einem Gewinde (17) versehenen und mit diesem Gewinde (17) in das dem Durchgangsloch (10) zugeordnete Gewindeloch (12) einschraubbaren Schaft (18),
b) eine am Schaft (18) angeordnete, radial über dessen Gewinde (17) vorstehende, beim Einschrauben des Schafts (18) in das Gewindeloch (12) gegen die Befestigungsfläche (5) spannbare Spannfläche (19), die, zusammen mit dem Schaft (18), mit Spiel in das eine Durchgangsloch (10) im Gegengewicht (7) einführbar ist,
c) ein auf dem Schaft (18) längsverschiebbares Zentrierstück (20) mit einem zur Schaftachse koaxialen, sich zum einschraubbaren Gewindeende hin verjüngenden Außenkonus (22), dessen kleinster Durchmesser kleiner und dessen größter Durchmesser größer ist als der Durchmesser des einen Durchgangslochs (10) im Gegengewicht (7),
und durch
d) eine auf dem Schaft (18) an dessen dem einschraubbaren Gewindeende gegenüberliegendem Ende aufgeschraubte Mutter (21), mit der bei in das Gewindeloch (12) eingeschraubtem Schaft (18) das mit einem Teil seiner axialen Länge in dem Durchgangsloch (10) des Gegengewichts (7) angeordnete Zentrierstück (20) belastbar ist.

2. Vorrichtung nach Anspruch 1,
**dadurch gekennzeichnet**,
daß die Mutter eine Rändelmutter (21) ist.

3. Vorrichtung nach Anspruch 1 oder 2,
**dadurch gekennzeichnet**,
daß das Zentrierstück (20) auf dem Schaft (18) mit Schiebesitz geführt ist.

4. Vorrichtung nach einem der Ansprüche 1 bis 3,
**dadurch gekennzeichnet**,
daß der Konuswinkel des Zentrierstücks (20) geringfügig größer ist als der Selbsthemmungswinkel, insbesondere etwa 6° beträgt.

5. Verfahren zum ausgerichteten Befestigen eines Gegengewichts (7) an einer Kurbelwelle (1) mit Hilfe zweier Befestigungsschrauben (14, 15), die durch zwei Durchgangslöcher (10, 11) im Gegengewicht (7), das auf eine Befestigungsfläche (5) an einer Kurbelwange (2) der Kurbelwelle (1) aufgelegt ist, in zwei Gewindelöcher (12, 13) in der Kurbelwange (2) eingeschraubt werden, durchgeführt mit der Vorrichtung nach einem der Ansprüche 1 bis 4,
**gekennzeichnet** durch folgende Verfahrensschritte:
a) das eine Durchgangsloch (10) des auf die Befestigungsfläche (5) aufgelegten Gegengewichtes (7) wird mit dem diesem Durchgangsloch (10) zugeordneten Gewindeloch (12) grob ausgerichtet,
b) der Schaft (18) der Vorrichtung wird in das eine Durchgangsloch (10) eingesetzt und mit seinem Gewindeende in das Gewindeloch (12) eingeschraubt, bis die Spannfläche (19) auf der Befestigungsfläche (5) aufliegt und mit dieser verspannt ist,
c) das Zentrierstück (20) wird von dem dem Einschraubende des Schaftes (18) gegenüberliegenden Schaftende aus auf das eine Durchgangsloch (10) aufgesetzt und durch Anziehen der Mutter (21) belastet,
d) das Gegengewicht (7) wird durch Drehen um die Vorrichtung in Kurbelwellenquerrichtung ausgerichtet,
e) eine Befestigungsschraube (14) wird in das andere Durchgangsloch (11) eingesetzt und in dem diesem zugeordneten Gewindeloch (13) festgeschraubt,
f) die Vorrichtung zum Ausrichten wird entfernt,
g) eine Befestigungsschraube (15) wird in das eine Durchgangsloch (10) eingesetzt und im zugeordneten Gewindeloch (12) festgeschraubt.

6. Verfahren nach Anspruch 5,
**dadurch gekennzeichnet**,
daß zum Ausrichten des Gegengewichts (7) in Kurbelwellenquerrichtung zwischen der Kurbelwange (2), an der das Gegengewicht (7) befestigt wird, und einer benachbarten Kurbelwange (3) ein Distanzstück (23) eingesetzt wird.

## Claims

1. A device for adjusting a counter weight (7) applied to a fixing surface (5) on a crank web (2) of a crankshaft (1), the adjustment serving to prepare for positionally accurate fixing of the counter weight (7) on the crank web (2) by means of two fixing screws (14, 15) guided through two bores (10, 11) in the counter weight (7) and screwed into two screw threaded holes (12, 13) in the crank web (2) and starting from the fixing surface (5), characterised by
a) a stem (18) which can be inserted into one through bore (10) and provided at the end with a screw thread (17) which is adapted to be screwed into the screw threaded hole (12) associated with the bore (10),
b) a clamping surface (19) disposed on the stem (18) and projecting radially beyond its screw thread (17) and which, when the stem (18) is screwed into the screw threaded hole (12), can be clamped against the fixing surface (5) and which, together with the stem (18), can be introduced with clearance into one bore (10) in the counter weight (7),
c) adapted for longitudinal displacement on the stem (18), a centring piece (20) with an external cone (22) coaxial with the stem axis and tapering towards the screw-in screw threaded end, and of which the smallest diameter is smaller while its greatest diameter is greater than the diameter of the one bore (10) in the counter weight (7) and by
d) a nut (21) screwed onto the stem (18) at the end opposite the screw-in screw threaded end and with which, when the stem (18) is screwed into the screw threaded hole (12), the centring piece (20) which has a part of its axial length in the through bore (10), can be loaded.

2. A device according to claim 1, characterised in that the nut is a knurled nut (21).

3. A device according to claim 1 or 2, characterised in that the centring piece (20) is guided with a sliding fit on the stem (18).

4. A device according to one of claims 1 to 3, characterised in that the cone angle of the centring piece (20) is slightly greater than the self-locking angle and is in particular about 6°.

5. A method for the aligned fixing of a counter weight (7) on a crank shaft (1) by means of two fixing screws (14, 15) which are passed through two bores (10, 11) in the counter weight (7) which is placed on a fixing surface (5) on a crank web (2) of the crank shaft (1) and screwed into two screw threaded holes (12, 13) in the crank web (2), accomplished by means of the device according to one of claims 1 to 4, characterised by the following procedural steps:
a) one bore (10) in the counter weight (7) which is placed on the fixing surface (5) is roughly aligned by means of the screw threaded hole (12) associated with this through bore (10),
b) the stem (18) of the device is inserted into one bore (10), its screw threaded end being screwed into the screw threaded hole (12) until the clamping surface (19) is resting on the fixing surface (5) and is clamped to this latter,
c) the centring piece (20) is fitted onto one through bore (10) from the stem end opposite the screw-in end of the stem (18) and is loaded by tightening of the nut (21),
d) the counter weight (7) is aligned in the transverse direction of the crank shaft by rotation about the device,
e) a fixing screw (14) is inserted into the other through bore (11) and screwed tightly into the screw threaded hole (11) associated therewith,
f) the aligning device is removed,
g) a fixing screw (15) is inserted into one through bore (10) and screwed tightly in the associated screw threaded hole (12).

6. A method according to claim 5, characterised in that a spacing member (23)is inserted between the crank web (2) on which the counter weight (7) is fixed, and an adjacent crank web (3) in order to align the counter weight (7).

## Revendications

1. Dispositif pour ajuster un contrepoids (7) monté sur une surface de fixation (5) prévue sur un bras de manivelle (2) d'un vilebrequin (1), l'ajustage servant à préparer la fixation du contrepoids (7) en position précise sur le bras de manivelle (2) au moyen de deux boulons de fixation (14, 15), guidés dans deux trous de passage (10, 11) formés dans le contrepoids (7) et vissés dans deux trous filetés (12, 13) formés dans le bras de manivelle (2) à partir de la surface de fixation (5), caractérisé en ce qu'il comprend :
a) une broche (18) pouvant être engagée dans le trou de passage (10), pourvue d'un filetage (17) à une extrémité et pouvant être vissée au moyen de ce filetage (17) dans le trou fileté (12) associé au trou de passage (10),
b) une surface de serrage (19) située sur la broche (18), faisant saillie radialement de son filetage (17), pouvant être serrée, lors du vissage de la broche (18) dans le trou fileté (12), contre la surface de fixation (5) et qui peut être engagée, en même temps que la broche (18), avec du jeu dans un des trous de passage (10) formés dans le contrepoids (7),
c) une pièce de centrage (20), déplaçable longitudinalement sur la broche (18) et comportant un cône extérieur (22), coaxial à l'axe de broche, réduisant de section vers l'extrémité vissable du filetage et dont le diamètre minimal est plus petit que le diamètre de l'un des trous de passage (10) du contrepoids (7) tandis que son diamètre maximal est plus grand que le diamètre de ce trou de passage (10), et
d) un écrou (21), vissé sur la broche (18) à son extrémité opposée à l'extrémité vissable du filetage et au moyen duquel, lorsque la broche (18) est vissée dans le trou fileté (12), la pièce de centrage (20), engagée sur une partie de sa longueur axiale dans le trou de passage (10) du contrepoids (7), peut être sollicitée.

2. Dispositif selon la revendication 1, caractérisé en ce que l'écrou (21) est un écrou moleté.

3. Dispositif selon la revendication 1 ou 2, caractérisé en ce que la pièce de centrage (20) est guidée sur la broche (18) au moyen d'une surface de glissement.

4. Dispositif selon une des revendications 1 à 3, caractérisé en ce que l'angle de cône de la pièce de centrage (20) est légèrement plus grand que l'angle d'irréversibilité, en ayant notamment une valeur d'environ 6°.

5. Procédé pour la fixation ajustée d'un contrepoids (7) sur un vilebrequin (1) à l'aide de deux boulons de fixation (14, 15), qui seront engagés dans deux trous de passage (10, 11) prévus dans le contrepoids (7), monté sur une surface de fixation (5) prévue sur un bras de manivelle (2) du vilebrequin (1), et ensuite vissés dans deux trous filetés (12, 13) prévus dans le bras de manivelle (2), procédé mis en oeuvre au moyen du dispositif selon une des revendications 1 à 4,
- procédé caractérisé par les étapes opératoires suivantes :
a) un des trous de passage (10) du contrepoids (7), monté sur la surface de fixation (5), est aligné grossièrement avec le trou fileté (12) associé à ce trou de passage (10),
b) la broche (18) du dispositif est engagée dans un des trous de passage (10) et est vissée par son extrémité filetée dans le trou fileté (12) jusqu'à ce que la surface de serrage (19) s'applique contre la surface de fixation (5) et soit fixée sur celle-ci,
c) la pièce de centrage (20) est mise en place, à partir de l'extrémité de la broche (18) qui est opposée à son extrémité de vissage, sur un des trous de passage (10) et elle est sollicitée par vissage de l'écrou (21),
d) le contrepoids (7) est aligné par rotation autour du dispositif dans la direction transversale du vilebrequin,
e) un boulon de fixation (14) est engagé dans l'autre trou de passage (11) et est fixé par vissage dans le trou fileté (13) associé au trou (11),
f) le dispositif d'ajustage est enlevé,
g) un boulon de fixation (15) est engagé dans l'autre trou de passage (10) fixé par vissage dans le trou fileté (12) associé.

6. Procédé selon la revendication 5, caractérisé en ce que, pour l'ajustage du contrepoids (7) une pièce d'espacement (23) est mise en place, dans la direction transversale du vilebrequin, entre le bras de manivelle (2), sur lequel est fixé le contrepoids (7), et un bras de manivelle (3) adjacent.
